# EUROPEAN PATENT SPECIFICATION

(11) **EP 2 496 633 B1**
(45) Date of publication and mention of the grant of the patent: **29.03.2017**
(21) Application number: 10774390.8
(22) Date of filing: 29.10.2010
(51) Int. Cl.: C08G 77/458, C08L 83/10, C09D 183/10

(54) **PROTECTIVE COATING COMPOSITIONS CONTAINING HYDROLYSABLE SILANES**
SCHUTZBESCHICHTUNGSZUSAMMENSETZUNGEN MIT HYDROLYSIERBAREN SILANEN
COMPOSITIONS DE REVÊTEMENT PROTECTEUR CONTENANT DES SILANES HYDROLYSABLES

(30) Priority: 02.11.2009 GB 0919156
(43) Date of publication of application: 12.09.2012
(73) Proprietor: 3M Innovative Properties Company, St. Paul, MN 55133-3427 (US)
(72) Inventor: AUDENAERT, Frans, A., B-1831 Diegem (BE); DAMS, Rudolf, J., B-1831 Diegem (BE); KUEHNEWEG, Bernd, 41453 Neuss (DE); DOELEN, Leonardos, A.M., 41453 Neuss (DE); FURTAK, Christoph, 41453 Neuss (DE); KOEHLER, Frank, 41453 Neuss (DE)
(74) Representative: Kurz, Arnd
(86) International application number: PCT/US2010/054597
(87) International publication number: WO 2011/053744

(56) References cited:
- EP-A1- 1 006 131
- DE-A1-102007 021 630
- US-A- 5 760 155

## Description

### Field of the invention

The present disclosure relates to coating compositions for providing a protective coating on hard surfaces. In particular, the coating compositions provide abrasion resistant, soil and stain resistant protective coatings. The invention further relates to hard surfaces treated with the compositions and methods of coating.

### Background

Many household and outdoor appliances contain hard surfaces, including surfaces made of ceramics, glass, wood, metals and hard plastics, that are subjected to accumulated exposure to dirt such as residues of food, soap in case of household appliance or paint, for example as a result of graffiti or other kinds of vandalism. These surfaces are often also subjected to abrasion, for example scratching by abrasive materials or aggressive scrubbing when trying to remove the dirt or to intentional scratching due to vandalism in case of outdoor use.

Typical household applications include, for example, shower cabins, bathtubs, sinks, faucets, extractor hoods. Typical outdoor applications include interior of public transport vehicles, waste bins, sound barriers on roads trains and trams.

Protective coatings are provided to protect surfaces from staining or damage. For example, silane hybrid coating compositions have been proposed for protecting hard surfaces and making them stain repellent.

EP 1661873 describes coatings comprising a resin and a hardener, wherein the resin is obtained by reacting nano-particle sol(s) of organofunctional silanol(s) exhibiting reactivity towards amino, amide, nitrile or/and isocyanate groups, with alkyl siloxane(s) and optionally organic binding agents, both exhibiting reactivity towards amino, amide, nitrile or/and isocyanate groups; and wherein the hardener comprises a component A comprising siloxane(s) having amino, amido, isocyanate and/or nitrilo groups; and/or comprising polyisocyanate; as well as a component B comprising one or more of an α,ω-aminofunctional, α,ω-amido-functional, α,ω-isocyanate-functional and α,ω-nitrilo-functional polysiloxane.

EP 1006131 describes coating compositions containing aliphatic polyisocyanate-aminosilane adducts and hydrolysable silanes. The polisocyanate-aminosilane adducts are the reaction product of a polyisocyanate (having isocyanate equivalent of 2.5-5.5) with an amino silane and optional isocyanate reactive compounds.

Despite the known coating compositions there continues to be a desire to find further compositions capable of providing protective coatings to hard surfaces exposed to dirt accumulation and abrasion. In particular, it is desirable to provide durable coatings wherein the initial repellent properties are substantially maintained, even under abrading conditions. Furthermore, it is an object to provide a coating composition having improved ease of cleaning, without the need for aggressive detergents or intensive scrubbing and which retains this property with repeated cleanings. Desirably, the coatings are durable enough to survive abrasion tests without becoming detached from the surface to be protected.

### Summary

It has now been found that coating compositions comprising at least one hydrolysable silane and a polymer comprising a polysiloxane segment having a plurality of hydrolysable groups can provide a durable soil and stain resistant coating to surfaces.
Therefore, in one aspect there is provided a method of providing a protective coating to a surface as claimed.

In a further aspect there is provided the use of a composition as claimed
as an anti-graffiti agent.

In another aspect there is provided the use a composition as claimed
as a stain-removing agent.

In yet another aspect there is provided a substrate having a surface containing the reaction product of a condensation reaction of a composition as claimed. wherein the surface is selected from one of the following or combinations thereof:
engineered wood, steel, aluminum other than aluminum wheel rims, glass, ceramics, polymeric material comprising at least one polycarbonate, polyacrylate, polymethacrylate, polyester, polyamide copolymers thereof or combinations thereof.

In a further aspect there is provided a composition as claimed.

It has been found that coating compositions provided herein can be applied and cured into a thin, protective layer on coated or uncoated hard surfaces. The cured compositions provide high resistance to stains and soil. The cured compositions generally provide easy-to clean properties and easy wipe-off of attached soil and prevent stains from penetrating into the coated substrate. Stains, made by markers or graffiti paints, can be conveniently removed. These desirable properties remain upon exposure to an abrasion test.

### Detailed description

Before any embodiments of this disclosure are explained in detail, it is to be understood that the disclosure is not limited in its application to the details of compositions and the arrangement of components set forth in the following description. The invention is capable of other embodiments and of being practiced or of being carried out in various ways. Also, it is to be understood that the phraseology and terminology used herein is for the purpose of description and should not be regarded as limiting. Contrary to the use of "consisting", the use of "including," "containing", "comprising," or "having" and variations thereof is meant to be of broad scope and is meant to encompass the items listed thereafter, equivalents thereof and further items. The word "consisting of" is meant to be of limiting scope and is meant to encompass only the items listed thereafter and equivalents thereof but not any additional items. The term "consisting essentially of" has a meaning as defined in the description below.

The use of "a" or "an" is meant to encompass "one or more". Any numerical range recited herein is intended to include all values from the lower value to the upper value of that range. For example, a concentration range of from 1% to 50% is intended to be an abbreviation and to expressly disclose the values between the 1% and 50%, such as, for example, 2%, 40%, 10%, 30%, 1.5 %, 3.9 % and so forth.

The coating compositions provided herein comprise at least one hydrolysable silane corresponding to the formula (I) or hydrolysates or condensates thereof:

QₙSiG₄₋ₙ (I)

wherein Q represents a hydrocarbon group that can optionally be substituted, G represents a hydrolysable group and n is 0, 1 or 2

The term 'hydrolysable group' as used herein denotes a group that can be hydrolysed, which means is can react with water. The term "condensate" as used herein denotes a reaction linking two compounds by eliminating H₂O. For example the compound Q₃SiOMe contains a hydrolysable OMe groups which can react with water to give Q₃SiOH and HOMe. Two compounds Q₃SiOMe can react with each other in a condensation reaction to form Q₃Si-O-SiQ₃ by eliminating H₂O. The hydrolysable groups are preferably such that they yield a compound that is capable of undergoing a condensation reaction. Preferably, the hydrolysable groups upon hydrolysis yield groups capable of undergoing condensation reactions, such as hydroxyl groups.

Hydrolysis and condensation reactions typically occur in wet or humid conditions, optionally in the presence of a condensation catalyst. Examples of hydrolysable groups include halide groups, such as chlorine, bromine, iodine or fluorine, alkoxy groups (-OR' wherein R' represents an alkyl group, preferably containing 1 to 6, more preferably 1 to 4 carbon atoms and which may optionally be substituted by one or more halogen atoms), acyloxy groups (-O-(CO)-R" wherein R" is as defined for R'), aryloxy groups (-OR'" wherein R'" represents an aryl moiety, preferably containing 6 to 12, more preferably containing 6 to 10 carbon atoms, which may be optionally substituted by one or more substituents independently selected from halogens and C1-C4 alkyl groups which may optionally be substituted by one or more halogen atoms). In the above formulae R', R", and R"' may include branched structures.

Particular examples of hydrolysable groups include alkoxy groups, such as methoxy, ethoxy, propoxy and butoxy groups, chlorine and an acetoxy group. In some embodiments, preferred hydrolysable groups include methoxy and ethoxy groups.

In some embodiments, the hydrolysable silane includes tetra-, tri-or dialkoxy (preferably containing 1 to 4 carbon atoms) compounds.

The hydrocarbon groups Q may be the same or different and are generally not capable of hydrolyzing under the conditions listed above. For example, the hydrocarbon groups Q may be independently selected from an aliphatic hydrocarbon group, for example a C1-C30 alkyl group, which may be a straight chain or may be branched and may include one or more cyclic hydrocarbon structures, a C6-C30 aryl group (optionally substituted by one or more substituents selected from halogens and C1-C4 alkyl groups), or a C7-C30 aralkyl group.

Representative examples of hydrolysable silanes according to formula (I) include tetra methoxysilane, tetra ethoxysilane, methyl triethoxysilane, dimethyldiethoxysilane, octadecyltriethoxysilane, and methyl trichlorosilane. Particularly suitable are tetra ethoxysilane, tetra methoxysilane, methyl triethoxysilane, methyl trimethoxysilane, diethyl diethoxysilane and dimethyl diethoxysilane and the hydrolysates and condensates thereof.

Single compounds or mixtures of compounds or the hydrolysates and condensation products thereof may be used with the proviso that not all hydrolysable groups have been consumed by hydrolysis and/or condensation. The term "condensation products" used here means some of the hydrolysable groups of the hydrolysable silane have reacted to form a condensation product of the hydrolysable silane compound. Particularly at least 2%, preferably at least 5%, more preferably at least 10% of the hydrolysable groups are still available for hydrolysation or condensation reactions. The condensation and hydrolysation reactions may occur in the presence of water and/or a catalyst. Typically, the hydrolysation and/or condensation reactions only proceed slowly at room temperature and in the absence of proton acids but may proceed more rapidly or may only take place at elevated temperatures, for example temperatures greater than 40°C.

A preferred composition comprising hydrolysable silanes is a composition comprising a combination of and/or a condensation product of compounds according to the formula (Ia):

SiG₄ (Ia)

wherein each G represents independently a hydrolysable group as described for the groups G above, with the proviso that the condensation product has unconsumed hydrolysable goups.

The coating compositions further comprise at least one polymer A comprising at least one siloxane segment and a plurality of-SiY₃ functional groups wherein Y represents a hydrolysable group.

The hydrolysable groups Y present in polymer A may be the same or different and are generally capable of hydrolyzing, for example in wet or humid conditions, optionally in the presence of a condensation catalyst, such that polymer A can undergo condensation reactions.

Polymer A comprises a plurality of -SiY₃ functional groups such that the amount of hydrolyzable groups Y bonded to Si atoms is on average more than 6 per polymer. The amount of hydrolysable groups Y bonded to Si atoms is more than 10, preferably 12 or 24 per polymer.

The -SiY₃ groups, are preferably situated at a terminal end of the polymer but may also be alternatively or in addition to the terminal positions be present as pending groups or as terminal groups of pending side chains.

The at least one polysiloxane segment includes repeating units of silicon and oxygen atoms (-SiO-). In a particular embodiment, the polysiloxane segment has an average number of-SiO- units of 5 to 200, more in particular of 6 to 100. The segment can form a linear or branched backbone. In a preferred embodiment, the polymer comprises repeating units of the formula -(R)₂SiO-, optionally in combination with repeating units of the formula -(RR¹)SiO-, wherein the groups R independently represent an alkyl group of 1 to 4 carbon atoms or an aryl group and R¹ represents a side group.
In one embodiment, polymer A only has a single polysiloxane segment.

The functional SiY₃ groups are connected to the at least one polysiloxane segment by one or more linking groups. Typically, such linking groups comprise one or more urethane and/or urea groups.
Polymer A is represented by the general formula (A):

(Y₃Si-)ₙL'-P-L"(-SiY'₃)ₘ (A)

wherein each Y and Y' is independently selected from alkoxy, aryloxy, acyloxy and halogens, n and m represent, independently from each other integers of 1, 2, 3, 4, 5, 6, 7, 8, 9 or 10 wherein the sum of n and m is at least 2, preferably 4 or at least 4, P represents the polysiloxane segments and L' and L" may be identical or different groups linking the silane residues -SiY₃ and SiY'₃ with the polysiloxane segment. Typically, L' and/or L" contain urethane, urea moieties and combinations thereof.

The polymers A may be prepared by various methods. For example in one embodiment the polymer A is prepared by reaction of
(i) a polyisocyanate comprising polysiloxane segments and
(ii) a compound having (a) one or more -SiY groups wherein Y represents a hydrolysable group and (b) an isocyanate reactive group

The term 'isocyanate reactive group' as used herein denotes a functional group that will react with an isocyanate group under typical reactive conditions for reacting an isocyanate group. Typical reactive conditions include reacting at a temperature of 20 to 150°C, for example 30 to 120°C. Typically the reactions involve the use of a catalyst. Generally, an isocyanate reactive group includes at least one Zerewittenoff hydrogen. Though not intended to be limiting, examples of isocyanate reactive groups include: alcohols, amines,
thiols and carboxylic acids and derivatives thereof. Useful isocyanate reactive groups include for example -OH, -NH- or -NH₂ and -SH, -CO₂R³, where R³ is hydrogen or hydroxyalkyl, -C(O)N(R¹)(R²), where R¹ and R² are independently hydrogen, hydroxyalkyl or polyalkylenepolyamine. Particularly useful isocyanate reactive groups include -OH,-NH- and -NH₂ groups.

The compounds having (a) one or more -SiY groups wherein Y represents a hydrolysable group and (b) an isocyanate reactive group include those according to the formula:

L-[Q-Si(Y)₃₋ₓ(R²)ₓ]_{d}

wherein L represents an isocyanate reactive group. Q is an organic linking group, x is 0, 1 or 2 and d is 1 or 2. R² independently represents an alkyl group, preferably a C1-C8 alkyl group (such as methyl, ethyl, propyl and iso-octyl) or an C1-C8 alkyl group containing a cyclic hydrocarbon structure (such as cycloalkyl, e.g. cyclohexyl or cyclopentyl), an aryl group (preferably containing 6 to 20 carbon atoms which may optionally be substituted by one or more C1-C4 alkyl groups or halogens or mixtures thereof), an alkylaryl group (preferably containing 7 to 12 carbon atoms) or an aralkyl group (preferably containing 7 to 12 carbon atoms).

The groups Y independently represent hydrolysable groups as defined with regard to formula (A) above. Particular suitable examples of hydrolysable groups include alkoxy groups selected from methoxy, ethoxy, propoxy and butoxy groups, and chlorine and an acetoxy group. Particularly preferred hydrolysable groups include methoxy and ethoxy groups.

The linking group Q is typically an alkylene group (preferably containing 1 to 10, more preferably containing 1 to 6 carbon atoms) optionally interrupted with nitrogen, oxygen or sulphur atoms, an arylene (preferably containing 6 to 20 carbon atoms which may be substituted by one or more C1-C4 alkyl groups, halogen atoms) or mixtures thereof.

In a particular preferred embodiment the compound having (a) one or more -SiY groups wherein Y represents a hydrolysable group and (b) an isocyanate reactive group is represented by the formula II:

T[-(CH₂)ₛ-SiY₃]ₕ (II)

wherein s is 1,2,3 or 4, h is 1 or 2, T represents an isocyanate reactive group and Y represents an alkoxy group, preferably a methoxy or ethoxy group.
Examples of compounds according to formula (II) include bis(3-trimethoxysilyl propyl)amine bis(3-triethoxysilyl propyl)amine, 3-aminopropyltrimethoxysilane and 3-aminopropyltriethoxysilane. A particularly preferred compound according to formula (II) is bis(3-trimethoxysilyl propyl)amine.

Polyisocyanates comprising siloxane segments can be prepared according to different methods. In one embodiment, the polyisocyanate comprising siloxane segments is the reaction product of a polysiloxane comprising at least one isocyanate reactive group and a polyisocyanate. The polysiloxanes comprising at least one isocyanate reactive group can be linear or branched polydialkyl siloxanes, polyalkylaryl siloxanes or polydiarylsiloxanes wherein the isocyanate reactive groups are situated at the end of the polymer chain, i.e. in the end group and/or in the terminal portion of side groups of the polysiloxane. In a preferred embodiment, the polysiloxane comprises at least two isocyanate reactive groups comprised in end groups of the polysiloxane chain. Representative examples of polysiloxanes of which the end groups comprise an isocyanate reactive group include polysiloxanes of the general formula III:

A-X-[Si(R)₂-O]ₙ-Si(R)₂-X-A (III)

wherein A is an isocyanate reactive group, X is a divalent linking group, optionally containing heteroatoms, each R is independently an alkyl group of 1-4 carbon atoms or an aryl group and n is a value between 2 and 200.
Particular useful examples of polysiloxanes having an isocyanate reactive group at the end of the polysiloxane chain include hydroxyl terminated polydialkylsiloxanes of the formulae:

HO-(CH₂)ₐ[Si(R^{c}₂)O]ₚ-Si(R^{c}₂)-(CH₂)_{b}-OH

and

HO-(CH₂)ₐ-O-(CH₂)ₓ[Si(R^{c}₂)O]ₚ-Si(R^{c}₂)-(CH₂)_{y}-O-(CH₂)_{b}-OH

wherein a and b are independently 1,2,3 or 4, p represents a value of 5 to 200 and R^{c} is an alkyl group of 1 to 4 carbon atoms, preferably R^{c} represents a methyl group.

Further useful examples include amino-terminated polydialkylsiloxanes of the formula:

NH₂-(CH₂)ₐ[Si(R^{c}₂)O]ₚ-Si(R^{c}₂)-(CH₂)_{b}-NH₂

wherein a, b, p and R^{c} are as defined above.

Polysiloxanes having isocyanate reactive end groups are commercially available and include for example those under the trade designations "IM11", "IM15", "IM22", "IM47", "FLUID NH 40D", "FLUID NH 130D", "FLUID OH 15D", "FLUID OH 40D" (all available from Wacker, Germany) and "X-22 160AS", "X-22-161", "KF-6001" and "KF-6002" (all available from Shin-Etsu, Japan).

The poly-isocyanate may be an aliphatic, alicyclic or aromatic compound. Particular suitable examples include diisocyanates. Examples include e.g. isophorone diisocyanate (IPDI), hexamethylene diisocyanate, 2,2,4-trimethyl-1,6-hexamethylene diisocyanate, dicyclohexylmethane-4,4'-diisocyanate; 4,4'- methylenediphenylene diisocyanate, 4,6-di-(trifluoromethyl)-1,3-benzene diisocyanate, 2,4-toluene diisocyanate, 2,6-toluene diisocyanate, o, m, and p-xylylene diisocyanate, 4,4'-diisocyanatodiphenylether, 3,3'-dichloro-4,4'- diisocyanatodiphenylmethane, 4,5'-diphenyl diisocyanate, 4,4'-diisocyanatodibenzyl, 3,3'-dimethoxy-4,4'-diisocyanatodiphenyl, 3,3'-dimethyl-4,4'-diisocyanatodiphenyl, 2,2'-dichloro-5,5'-dimethoxy-4,4'-diisocyanato diphenyl, 1,3-diisocyanatobenzene, 1,2-naphthylene diisocyanate, 4-chloro-1,2-naphthylene diisocyanate, 1,3- naphthylene diisocyanate, and 1,8-dinitro-2,7-naphthylene diisocyanate.

In addition to diisocyanates, also tri- and polyisocyanates can be used. Useful examples include isocyanurates e.g., cyclic trimer of hexamethylenediisocyanate and cyclic trimer of isophorone diisocyanate, and biurets containing tri-isocyanates. Typically the amount (in equivalents) of tri- and polyisocyanate should not exceed 40% of the total equivalents of isocyanate used, more preferably it should not exceed 25%.

The polyisocyanate comprising siloxane segments can be prepared in a one step condensation reaction. The polysiloxane of which the end groups comprise an isocyanate reactive group and a di-isocyanate are subjected to a condensation reaction. The di-isocyanate is added such that there is at least a two fold excess of isocyanate equivalents and the polyisocyanate on average has at least two isocyanate groups.

In an alternative embodiment, the polyisocyanate comprising siloxane segments can be prepared in a multistep reaction. In a first step, polysiloxane comprising at least one isocyanate reactive group is reacted with a polyisocyanate as is given above. The thus obtained polyisocyanate comprising siloxane segments can be chain extended by first reaction with a compound having at least three isocyanate reactive groups, added in amounts such that all free isocyanate groups are reacted. The thus obtained polysiloxane comprising urethane and/or urea segments and isocyanate reactive groups is then further reacted with a polyisocyanate. This polyisocyanate can be the same or different. The polyisocyanate is added in amounts such that the polyisocyanate on average has at least 4 isocyanate groups.

Suitable compounds having at least three isocyanate reactive groups include compounds having at least three hydroxyl groups, amino groups and combinations thereof. Examples include 3-amino 1,2 propane diol and 2-amino 1,3 propane diol, glycerol and trimehylolpropane. In a preferred embodiment, the compounds have isocyanate reactive groups that show a difference in reactivity towards isocyanates and one isocyanate reactive group is more reactive than the other two. Examples include compounds having one amino group and two hydroxyl groups or compounds having one primary alcohol group and two secondary or tertiary alcohols. Suitable examples include 3-amino 1,2 propane diol and 2-amino 1,3 propane diol. Particularly suitable compounds include 3-amino 1,2 propane diol.

Useful polyisocyanate are as described above. One polyisocyanate or a mixture of polyisocyanates can be used in the reactions.

Polymer A can be also prepared in a one step condensation reaction wherein the polyisocyanate comprising polysiloxane segments and urethane and/or urea segments is reacted with the compound having (a) at least one -SiY group and (b) at least one isocyanate reactive group. The condensation reaction is maintained until all isocyanate groups have reacted. In an alternative embodiment, polymer A can be prepared in a multistep reaction, where the polyisocyanate comprising polysiloxane segments is first prepared in situ.

In an alternative embodiment, polymer A is prepared by reaction of
(i) a polyisocyanate comprising polysiloxane segments,
(ii) a compound having at least three isocyanate reactive groups and
(iii) a compound having (a) one or more -SiY groups wherein Y represents a hydrolysable group and (b) an isocyanate group

The compound having at least three isocyanate reactive groups preferably has isocyanate reactive groups that show a difference in reactivity towards isocyanates and is as defined above with respect to the synthesis of the polyisocyanate comprising polysiloxane segments. Particularly preferred compound includes 3-amino 1,2 propane diol.

The compound having (a) one or more -SiY groups wherein Y represents a hydrolysable group and (b) an isocyanate group is represented by the formula

P-SiR'ₙY'₄₋ₙ

wherein R' represents a hydrocarbon group that can optionally be substituted, Y' represents a hydrolysable group as defined with regard to formula (A) above and n is 0, 1 or 2. P represents an organic group containing at least one isocyanato group. Representative examples include 3-isocyanato propyl triethoxysilane and 3-isocyanato propyl trimethoxysilane. In this embodiment, polymer A is typically prepared in a multistep condensation reaction. In a first step the polyisocyanate comprising polysiloxane segments is reacted with the compound having at least three isocyanate reactive groups. The organic compound is added in amounts to obtain on average at least 4 equivalents isocyanate reactive groups per polymer chain. The condensation reaction is maintained until all free isocyanate groups have reacted. In a next step, equivalent amounts of the compound having (a) one or more -SiY groups wherein Y represents a hydrolysable group and (b) an isocyanate group is added to the reaction mixture. The reaction is maintained until all isocyanate groups have reacted. Also in this embodiment, the polyisocyanate comprising polysiloxane groups can first be prepared in situ.

It will be appreciated by one skilled in the art that the condensation reactions may result in a mixture of polymers. In any case, the compounds, isocyanates and polysiloxane starting materials should be chosen such that a polymer A is formed wherein the amount of hydrolysable groups Y bonded to Si atoms is on average more than 6 per polymer. In a particular embodiment the polymer A should have more than 10, preferably 12 or 24 hydrolyzable groups per polymer. It has been found that this might be especially advantageous for impairing compatibility of the hybrid condensate typically resulting in more clear final coatings.

The condensation reactions to prepare the polyisocyanate comprising polysiloxane segments and the polymer A can be carried out under conventional conditions well-known to those skilled in the art. In some embodiments, the reaction is run in the presence of a catalyst. Suitable catalysts include tin salts such as dibutyltin dilaurate, stannous octanoate, stannous oleate, tin dibutyldi-(2-ethyl hexanoate), stannous chloride; and others known to those skilled in the art. The amount of catalyst present will depend on the particular reaction, and thus it is not practical to recite particularly preferred concentrations. Generally however, suitable catalyst concentrations are from about 0.001 to 10 percent, preferably about 0.01 to 5 percent, by weight based on the total weight of the reactants.

The condensation reactions are preferably carried out under dry conditions in a polar solvent such as ethyl acetate, acetone, methyl ethyl ketone, methyl isobutyl ketone, and the like.

Suitable reaction temperatures will be easily determined by those skilled in the art based on the particular reagents, solvents, and catalysts being used. While it is not practical to enumerate particular temperatures suitable for all situations, generally suitable temperatures are between about room temperature and about 120°C.

The treatment compositions according to the invention may further comprise condensation products of (i) said hydrolysable silane according to formula (I) or hydrolysates or condensates of said hydrolysable silane according to formula (I) and (ii) said polymer A. In order to prepare a treatment composition according to the present invention, polymer A comprising a polysiloxane segment and having at least 6 -SiY functional groups is combined in an organic solvent with at least one hydrolysable silane or hydrolysates or condensates thereof.

By the time a coating composition is applied to the substrate the polymer and the hydrolysable silane or hydrolysates or condensates thereof may have undergone a condensation reaction. Accordingly, the treatment composition may comprise condensation products of said polymer A and said hydrolysable silane according to formula (I) or hydrolysates or condensates of said hydrolysable silane according to formula (I). Generally, the amount of condensation that takes place prior to coating will depend on the concentration and nature of polymer A and the hydrolysable silane or hydrolysates or condensates thereof, the temperature and the time between preparation of the coating composition and the coating of the substrate.

The coating composition may comprise further additives. Examples include titanates, zirconates and aluminates having hydrolysable groups. Examples include tetra-methyl orthotitanate, tetra ethyl orthotitanate, tetra-iso-propyl orthotitanate, tetra-n-propyl orthotitanate, tetraethyl zirconate, tetra-iso-propyl zirconate, tetra-n-propyl zirconate, triisobutyl aluminate and the like.

The coating composition can contain further additives, such as wetting or spreading agents. These types of additives are often referred to as surfactants. Suitable surfactants typically include non-polar groups, such as a polysiloxane, and a polar, preferably non-ionic group. Examples include polysiloxane non-ionic surfactants. Of particular interest are trisiloxane non-ionic surfactant, hydroxyl endcapped and having ethylene oxide segments and/or propylene oxide segments. Further suitable examples include oligomeric polydimethylsiloxanes, hydroxyl endcapped and having pendant and/or alpha-omega ethylene oxide segments. Non-ionic polysiloxane surfactants useful in the composition of the invention are commercially available and include surfactants available under the trade designation "Silwet" (available from Momentive Performance Chemicals Inc, Columbus, Ohio).

The coating composition is dispersed in an organic solvent. Suitable organic solvents, or mixtures of solvents are liquid at room temperature. They can be selected from aliphatic alcohols (preferably containing 1 to 6 carbon atoms), such as methanol, ethanol, isopropylalcohol and n.butanol; ketones such as acetone or methyl ethyl ketone; esters, such as ethyl acetate, methylformate and ethers, such as diethyl ether. Particularly preferred solvents include ethanol, isopropanol and methyl ethyl ketone.

The coating composition will typically contain between 1% and 50% by weight of solids.

In general, the amount of polymer A and the condensation products (c) of said polymer A and hydrolysable silane according to formula (I) or hydrolysates or condensates of said hydrolysable silane according to the formula (I) to the total amount of solids is at least 1%, preferably at least 5% and up to 30% by weight.

In order to advance to full activation (through hydrolysis) of the treatment compositions, water is preferably added to the composition. Typically, the amount of water will be between 0.1 and 20% by weight of the total composition, more preferably between 0.1 and 10% by weight. In addition to water, an organic or inorganic acid (typically proton acids) or base catalyst should preferably be added to the coating composition. In an alternative embodiment, the catalyst can separately be applied to the substrate for example as part of a primer coating or by spraying a catalyst composition on the substrate before or after application of the coating composition according to the invention.

Organic acid catalysts (proton acids) include acetic acid, citric acid, formic acid, triflic acid and the like. Examples of inorganic acids include sulphuric acid, hydrochloric acid and the like. Examples of useful base catalysts include sodium hydroxide, potassium hydroxide and triethylamine. Organometallic catalysts can also be used. Examples include dibutyltindilaurate and tin di (2-ethylhexanoate).

The catalyst will generally be used in amounts between 0.01 and 10%, more preferably between 0.05 and 5% by weight of the total composition.

The coating compositions provided herein can be applied directly onto the substrate. A primer may be first coated on the substrate, in order to improve adhesion of the treatment composition, which however for the surfaces as described below may not be necessary to achieve a durable and robust coating. Suitable primers include primers for paints and coatings as is known in the art. Suitable commercially available examples include primers available under the trade designations "APD111" and "3MAdhesion Promoter 4298" (available from 3M Company, St. Paul, Minnesota), "SHP 401" (available from Momentive Performance Chemicals Inc.) and "Keim Silan Primer" (alkoxyalkyl silane, available from Keim Paints, Charlotte, North Carolina). After drying and optional curing the treatment composition can then be applied onto the primer.

The treatment composition is typically applied in amounts sufficient to produce a coating that provides soil and stain resistance and easy-clean properties. Typically the coating thickness after drying and curing is between 0.1 and 50 µ, preferably between 1 and 10µ.

In accordance with a particular embodiment, compositions for application to a substrate are prepared by blending polymer A with the hydrolysable silanes according to formula (I) or hydrolysates or condensates thereof and further optional additives in a solvent or solvent mixture. Typical solvents are organic solvents capable of dissolving or dispersing the ingredients. Water and catalyst are optionally added and the mixture. The mixture is allowed to undergo further hydrolysis and/or condensation for about 30 minutes to 72 hours before applying the mixture to the substrate.

A wide variety of coating methods can be used to apply the compositions to the substrate as known for coating liquid compositions. Suitable methods include brushing, spraying, dipping, rolling, spreading, and the like. A preferred coating method for application of the coating composition includes spray application.

A substrate to be coated can typically be contacted with the treating composition at room temperature (typically, about 15°C to about 30°C). Following application, the treated substrate is typically subjected to a heat treatment, preferably involving a temperature of from about 40°C to about 300°C. The heat treatment is carried out for a time sufficient to cure the composition. Typically, the heat-treatment is carried out over a period of from about 10 minutes to about 1 hour. Higher temperatures require only shorter curing times. The heat-treatment leads to hydrolysis and condensation of the hydrolysable silanes and polymer A or their respective hydrolysation or condensation products that contained still hydrolysable groups. The heat-treatment can be carried out at ambient air or at humid conditions. Therefore, the coated compositions contain the reaction product of condensation reactions of the ingredients of coating compositions provided herein. The condensation reactions are typically preceded by hydrolysis reactions.

The coating compositions can be used to provide a protective coating on substrates selected from steel, glass, ceramics, engineered wood, polymeric materials comprising one or more of the following polymers, copolymers thereof or combinations thereof: polycarbonates, polyacrylates, polyamides, polyesters. Further examples include aluminium other than aluminium wheel rims. Engineered wood as used herein includes composite materials containing wood fibers and/or saw dust and one or more adhesive resins glueing the saw dust or fibers together. Examples of engineered woods include particle board, hard board or fiber board.

The coated substrates may be components of typical household applications and include, for example but are not limited to shower cabins, bathtubs, sinks, faucets, extractor hoods. The coated substrates may also be components of outdoor applications examples of which include interior of public transport vehicles (such as benches, walls, floorings), waste bins and sound barriers.

Substrates treated with the compositions according to the invention are characterized by having a high water repellency as indicated by the static contact angle for water. For example, the treated surface of the substrate is characterized by a static contact angle against water of higher than 90, preferably higher than 95 (as measured using a goniometer available under the trade designation "Olympus TGHM" or a contact angle analyzer available under the trade designation "DSA100" (both available from Krüss GmbH, Germany).

Treated substrates are further characterized by excellent stain resistance. An indicator for stain resistance is given by the receding contact angle. Typically treated substrates have a receding contact angle for water that is higher than 60, preferably higher than 70, more preferably higher than 80, as measured using a contact angle analyzer, such as the contact analyzer available under the trade designation "DSA100" Trüss GmbH, Germany.

Treated substrates are further characterised by having high soil resistance and/or easy-cleanability. Soil is not attached to the treated surface because it has low adhesion values. For example 180° peel values of not more than 0.6 N, preferably not more than 0.5 N are measured against commercially available tape, such as that available under the trade designation "3M Scotch Magic Tape 810" from 3M Company, St. Paul, Minnesota. (The 180° peel adhesion was measured using a peel tester, such as the one available under the trade designation "Rycobel" from Thwing-Albert Instruments, Co. A piece of tape available under the trade designation "3M Scotch Magic Tape 810" (19mm width) was applied to the coated substrate. The tape was rolled over four times with a 1 kg stainless steel roll. The 180° peel was tested using a velocity of 0.3m/min).

These desirable properties are typically maintained despite extended exposure or use and repeated cleanings and/or abrasion. Therefore, the coating compositions provided herein may be used to provide anti-graffiti properties to the substrate (in that paint can be easily removed and/or does not penetrate into the substrate). The coating agents may be used to improve the anti-scratching properties of the substrates and/or the anti-soiling properties and/or the easy-to-clean properties of the substrate.

### EXAMPLES

The following examples further illustrate the invention without the intension however to limit the invention thereto. All parts are by weight unless indicated otherwise.

**ABBREVIATIONS**

| Abbreviations | Product | Availability |
|---|---|---|
| IPDI | Isophorone diisocyanate | Sigma-Aldrich, St. Louis, Missouri |
| BTMSPA | Bis-(3-trimethoxysilyl propyl)amine | Sigma-Aldrich |
| PDMS-1 | KF-6002: α,ω polydimethylsiloxane diol with about 43 SiO repeating units (MW 3200) | Shin-Etsu, Tokyo, Japan |
| PDMS-2 | X-22-160AS: α,ω Polydimethylsiloxane diol with about 13 SiO repeating units (OH equivalent 500) | Shin-Etsu |
| TEOS | Tetraethyl orthosilicate ; Si(OC₂H₅)₄ | Sigma-Aldrich |
| MTEOS | Methyltriethoxy silane ; CH₃Si(OC₂H₅)₃ | Sigma-Aldrich |
| APD | 3-Aminopropane-1,2-diol | Sigma-Aldrich |
| IPTES | 3-Isocyanatopropyl triethoxysilane | Sigma-Aldrich |
| MEK | 2-butanone | Sigma-Aldrich |
| SIL-1 | Worlée Protect 1507 (42% solids in ethanol and propyleneglycol methyletheracetate, containing trace amounts of water) | Worlée-Chemie GmbH, Germany |
| SIL-2 | PHC587B: 25% solids | Momentive Performance Chemicals Inc. |

### SYNTHESIS OF MATERIALS USED

### 1. Synthesis of polymer A

### 1.a. Polymer A-1: IPDI/PDMS-1/BTMSPA (molar 2/1/2)

In a three necked flask of 500 ml, fitted with a stirrer, thermometer, condenser and heating mantle, were placed 17.8 g (0.08 moles) IPDI, 20 g (0.04 moles) PDMS-1 and 58 g dry MEK and 0.05 g stannous octanoate catalyst (available from Aldrich). The reaction mixture was heated up to 80°C under nitrogen and reacted for 6 hours. The mixture was cooled to about 30°C under nitrogen and 13.6 g (0.04 moles) BTMSPA were added. The reaction was continued at 60°C for 16 hours under nitrogen atmosphere. IR-analysis indicated no residual isocyanate. The reaction mixture was cooled to room temperature.

### 1.b. Polymer A-2: IPDI/PDMS-2/BTMSPA (molar ratio 2/1/2)

Polymer A-2 was made according to the procedure for Polymer A-1, but using PDMS-2.

### 1.c. Polymer A-3: PDMS-1/IPDI/3-amino-1,2-propanediol/IPTES (molar ratio: 1/2/2/4)

A 250 ml reaction bottle was charged with 51.2 g PDMS-1 and 61 g anhydrous THF. After adding 7.10 g IPDI and 31 mg DBTL, the bottle was sealed and run for 3 hours in a Launder-o-meter at 75°C. The reaction mixture was cooled to room temperature. Then 2.94 g APD was added to the reaction mixture with a syringe while stirring, resulting in an exotherm to 40°C. After 2 hours stirring at room temperature and 30 min at 50°C, the reaction was completed according to FTIR (no remaining isocyanate absorption). A hazy, semi-viscous solution of 50% solids was obtained. 30.61 g of the above mixture was transferred to a 100 ml reaction bottle. 13.4 g MEK, 4.16 g IPTES and 1 drop DBTDL were added. The reaction was run for 3 hours at 75°C in a launder-o-meter. All isocyanate functions had been consumed according to FT-IR. A clear colourless non-viscous 40% solids liquid was obtained.

### METHODS OF APPLICATION AND TESTING

### Coating compositions

Coating compositions were prepared by mixing the polymer A with the hydrolysable silane. The mixture was allowed to condition at room temperature during 72 hours, prior to application to the substrate.

### Coating procedure

The described materials were coated on different substrates, as is given in the examples, by use of a bar coater, depositing a 25 µ liquid coating thickness. The treated samples were allowed to dry at room temperature for 10 minutes and then cured at 130°C for 30 minutes, unless otherwise indicated. After curing the treated test panels were conditioned at RT. The samples were tested 24 hours after coating.

### Substrates

Coating compositions according to the invention were tested on following substrates:

| | |
|---|---|
| Float Glass | Aqua Production, France |
| Glazed Ceramic Tiles | Villeroy & Boch, Germany |
| Un-glazed ceramic tiles | Villeroy & Boch, Germany |
| Stainless steel plate | Villeroy & Boch, Germany |
| Polymethylmethacrylate (PMMA) | Ideal Standard, Germany |
| Polycarbonate (PC) | Ideal Standard, Germany |

Respective data of tests shown in the following Examples and Comparative Examples are based on the following methods of measurement and evaluation criteria:

### Static Contact Angles (CA)

The treated substrates were tested for their static contact angles versus water (W) and n-hexadecane (O) using a goniometer available under the trade designation "Olympus TGHM" or a contact angle analyzer available under the trade designation "DSA100", both commercially available from Krüss GmbH as indicated in the examples. The contact angles were measured before (initial) and directly after abrasion (abrasion). The values are the mean values of 4 measurements and are reported in degrees. The minimum measurable value for a contact angle was 20°. A value <20° meant that the liquid spread on the surface.

### Receding Contact Angles (RCA) Test

The receding contact angles were measured using a contact angle analyzer available under the trade designation "DSA100", both commercially available from Krüss GmbH. The values of the receding contact angles are the mean values of 2 measurements and are reported in degrees.

### Bitumen test

A solution of 0.3 g standard bitumen available under the trade designation "Bitumen 5070" (available from Dortmunder Gussasphalt GmbH, Germany) in 1.5 ml heptane was prepared. Three times 1 drop of bitumen solution was put on the coated substrates with a pipette. The drops were allowed to dry for 24 hours at room temperature. The stains were then removed by a paper wipe. The results of the bitumen test ranged from -1 (worse than untreated sample), 0 (equal to untreated, stain can not be removed), 1 (minor part of the stain can be removed), 2 (most of the stain can be removed) to 3 (all of the stain can be removed).

### Abrasion Test

The treated substrates were abraded using a cleaning machine commercially available under the trade designation "Erichsen, 3M High Performance Cloth" from 3M Company and a cleaner commercially available under the trade designation CIF cleaner Uni-Lever, London, UK, using 40 cycles.

### 180° Peel adhesion

180° peel adhesion was measured using a peel tester commercially available under thr trade designation "Rycobel" from Thwing-Albert Instruments, Co. A piece of tape commercially available under the trade designation "3M ScotchMagic Tape 810" from 3M Company (19mm width) was applied to the coated substrate. The tape was rolled over four times with a stainless steel roll having 1 kg weight. The 180° peel was tested using a velocity of 0.3m/min. The results are expressed in Newton.

### Marker and graffiti paint resistance

### A. Materials used

### A.1. Marker stain tests

The stain repellency/removal was evaluated using 6 different permanent markers: Artline blue, Edding 500 black, Felt blue, Onyx black, Staedtler blue and Felt black. The results recorded are the averages of the results obtained with these 6 markers.

### A.2. Graffiti paint

Removal of Graffiti paint type Montaza, Azul Nostromo Blue was evaluated.

### B. Tests

### 1. Stain repellency test (indicated as "Soil-1")

The marker stain and/or ink/paint repellency was rated on a scale of 0 to 5:
0: paint drops fully beaded up
5: paint wets the surface completely

### 2. Ease of stain removal (indicated as "Soil-2")

The ease of stain removal in the stain resistance test (via rubbing with a dry cotton cloth) was rated on a scale from 1 to 3:
1: easy removal 2: medium 3: difficult removal

### 3. Stain resistance (stain release method) (indicated as "Soil-3")

A 4 cm diameter circular template was filled with a permanent marker. The stain was dried for 30 minutes. Stain removal was tested by rubbing for 20 seconds with a dry cotton cloth. The residual stains were then visually rated on the 8 point 3M Stain Release scale:
1: completely stained 8: no stain left

### EXAMPLES

### Examples 1 to 7 and reference examples Ref-1 to Ref-7

In examples 1 to 7 a coating composition was made by blending 9 parts (by solids) SIL-1 (42% solids in ethanol) with 1 part (by solids) polymer A-2 (at 50% solids in MEK). The coating composition was applied to different substrates, as is given in table 1, using the general coating procedure, but curing as indicated in table 1. For reference examples Ref-1 to Ref-7, the untreated test panels were used. The panels were tested for static contact angles (CA) versus water and n-hexadecane (initial and after abrasion) using goniometer available under the trade designation "Olympus TGHM". The panels were also tested according to the procedure for bitumen test. The bitumen test was repeated after abrasion. The results are given in Table 1.

**Table 1**

| Ex | Substrate | Curing | CA (°) H₂O/hexa decane | Bitumen test | CA (°) H₂O/hexa decane | Bitumen test |
|---|---|---|---|---|---|---|
| | | | Initial | | After abrasion | |
| 29 | Float glass - air side | 30 min 130°C | 102/37 | 3 | 98/37 | 3 |
| Ref-2 | Float glass - air side | No | 45/<20 | 0 | 40/<20 | 0 |
| 30 | Glazed ceramic tiles | 30 min 130°C | 95/32 | 3 | 93/34 | 3 |
| Ref-3 | Glazed ceramic tiles | No | 51/<20 | 0 | 44/<20 | 0 |
| 31 | Unglazed ceramic tiles | 30 min 130°C | 98/30 | 3 | 90/30 | 3 |
| Ref-4 | Unglazed ceramic tiles | No | 38/<20 | 0 | 33/<20 | -1 |
| 32 | Stainless steel plate | 30 min 130°C | 102/40 | 3 | 93/36 | 3 |
| Ref-5 | Stainless steel plate | No | 54/<20 | 1 | 49/<20 | 0 |
| 33 | PMMA | 3hrs 80°C | 90/35 | 3 | 87/32 | 2 |
| Ref-6 | PMMA | No | 73/<20 | 0 | 61/<20 | 0 |
| 34 | PC | 3hrs 80°C | 87/32 | 2 | 85/30 | 2 |
| Ref-7 | PC | No | 67/<20 | 0 | 64/<20 | 0 |

### Examples 8 and 9 and Reference Ref-8

In examples 8 and 9, coating compositions were made by blending 10 parts (by solids) SIL-2 (25% solids) with 1 part (by solids) polymer A-1 or A-3 respectively as is given in table 2. The compositions were further diluted with isopropanol to obtain a 12.5% solids dispersion. The coating compositions were applied to glass substrate (float glass), using the general coating procedure. For reference example Ref-8, untreated glass test panels were used. The panels were tested for static and receding contact angles (CA and RCA respectively) versus water (using a contact angle analyzer commercially available under the trade designation "DSA100" from Krüss GmbH) and for 180° peel adhesion versus a piece of tape commercially available under the trade designation "3M ScotchMagic Tape 810" from 3M Company. The results are given in table 2.Test results for the removal of stains made with markers and graffiti spray are given in table 3.

**Table 2**

| Ex | Composition | CA (°) | RCA (°) | 180° peel (N) |
|---|---|---|---|---|
| 8 | SIL-2/Pol A-1 | 100 | 82 | 0.13 |
| 9 | SIL-2/Pol A-2 | 99 | 72 | 0.40 |
| Ref 8 | / | 52 | 27 | 3.41 |

**Table 3**

| Ex | Composition | Average of 6 stain markers | | | Graffiti spray | | |
|---|---|---|---|---|---|---|---|
| | | Soil-1 | Soil-2 | Soil-3 | Soil-1 | Soil-2 | Soil-3 |
| 8 | SIL-2/Pol A-1 | 2 | 1.0 | 8.0 | 3 | 1.0 | 8.0 |
| 9 | SIL-2/Pol A-2 | 2.8 | 1.0 | 7.8 | 3.5 | 1.0 | 8.0 |
| Ref 8 | / | 5.0 | 3.0 | 1.4 | 5 | 3.0 | 1.0 |

## Claims

1. A method of providing a protective coating to a surface, comprising
(i) applying to the surface a composition comprising dispersed in an organic solvent
(a) at least one hydrolysable silane corresponding to the formula (I)
QₙSiG₄₋ₙ (I)
wherein Q represents a hydrocarbon group that can optionally be substituted, G represents a hydrolysable group and n is 0, 1 or 2;
(b) at least one polymer A comprising a polysiloxane segment and having a plurality of -SiY functional groups wherein Y represents a hydrolysable group and wherein the amount of hydrolyzable groups Y bonded to Si atoms is on average more than 6 per polymer;
or a condensation product of a hydrolysation reaction of (a) or (b) or (a) and (b) with the proviso that the reaction product is such that not all hydrolysable groups have been consumed,
(ii) heat-curing the composition,
wherein the surface is selected from one of the following or combinations thereof:
engineered wood, steel, aluminum other than aluminum wheel rims, glass, ceramics, polymeric material comprising at least one polycarbonate, polyacrylate, polymethacrylate, polyester, polyamide, copolymers thereof or combinations thereof and wherein the polymer A corresponds to the general formula:
(Y₃Si-)ₙL'-P-L"(-SiY'₃)ₘ
wherein each Y and Y' is independently selected from alkoxy, aryloxy, acyloxy and halogens, n and m represent, independently from each other integers of 1, 2, 3, 4, 5, 6, 7, 8, 9 or 10 wherein the sum of n and m is at least 2, preferably 4 or at least 4, P represents the polysiloxane segments and L' and L" may be identical or different groups linking the silane residues -SiY₃ and SiY'₃ with the polysiloxane segment.

2. The method according to any one of the preceding claims wherein said hydrolysable groups G are independently selected from alkoxy, aryloxy, acyloxy and halogens.

3. The method according to any one of the preceding claims wherein said polymer A comprises at least one polysiloxane segment having an average number of SiO units of 5 to 200.

4. The method according to any one of the preceding claims wherein L' and/or L" contain urethane, urea moieties and combinations thereof.

5. Use of a composition comprising dispersed in an organic solvent
(a) at least one hydrolysable silane corresponding to the formula (I)
QₙSiG₄₋ₙ (I)
wherein Q represents a hydrocarbon group that can optionally be substituted, G represents a hydrolysable group and n is 0, 1 or 2;
(b) at least one polymer A comprising a polysiloxane segment and having a plurality of -SiY functional groups wherein Y represents a hydrolysable group and wherein the amount of hydrolyzable groups Y bonded to Si atoms is on average more than 6 per polymer;
or a condensation product of a hydrolysation reaction thereof with the proviso that the reaction product is such that not all hydrolysable groups have been consumed,
as an anti-graffiti agent, wherein the polymer A corresponds to the general formula:
(Y₃Si-)ₙL'-P-L"(-SiY'₃)ₘ
wherein each Y and Y' is independently selected from alkoxy, aryloxy, acyloxy and halogens, n and m represent, independently from each other integers of 1, 2, 3, 4, 5, 6, 7, 8, 9 or 10 wherein the sum of n and m is at least 2, preferably 4 or at least 4, P represents the polysiloxane segments and L' and L" may be identical or different groups linking the silane residues -SiY₃ and SiY'₃ with the polysiloxane segment.

6. Use of a composition comprising dispersed in an organic solvent
(a) at least one hydrolysable silane corresponding to the formula (I)
QₙSiG₄₋ₙ (I)
wherein Q represents a hydrocarbon group that can optionally be substituted, G represents a hydrolysable group and n is 0, 1 or 2;
(b) at least one polymer A comprising a polysiloxane segment and having a plurality of -SiY functional groups wherein Y represents a hydrolysable group and wherein the amount of hydrolyzable groups Y bonded to Si atoms is on average more than 6 per polymer; or a condensation product of a hydrolysation reaction thereof with the proviso that the reaction product is such that not all hydrolysable groups have been consumed,
as a stain-removing agent, wherein the polymer A corresponds to the general formula:
(Y₃Si-)ₙL'-P-L"(-SiY'₃)ₘ
wherein each Y and Y' is independently selected from alkoxy, aryloxy, acyloxy and halogens, n and m represent, independently from each other integers of 1, 2, 3, 4, 5, 6, 7, 8, 9 or 10 wherein the sum of n and m is at least 2, preferably 4 or at least 4, P represents the polysiloxane segments and L' and L" may be identical or different groups linking the silane residues -SiY₃ and SiY'₃ with the polysiloxane segment.

7. A substrate having a surface containing the reaction product of a condensation reaction of a composition comprising dispersed in an organic solvent
(a) at least one hydrolysable silane corresponding to the formula (I)
QₙSiG₄₋ₙ (I)
wherein Q represents a hydrocarbon group that can optionally be substituted, G represents a hydrolysable group and n is 0, 1 or 2;
(b) at least one polymer A comprising a polysiloxane segment and having a plurality of -SiY functional groups wherein Y represents a hydrolysable group and wherein the amount of hydrolyzable groups Y bonded to Si atoms is on average more than 6 per polymer;
or a condensation product of a hydrolysation reaction thereof with the proviso that the reaction product is such that not all hydrolysable groups have been consumed,
and wherein the surface is selected from one of the following or combinations thereof:
engineered wood, steel, aluminum other than aluminum wheel rims, glass, ceramics, polymeric material comprising at least one polycarbonate, polyacrylate, polymethacrylate, polyester, polyamide copolymers thereof or combinations thereof, and wherein the polymer A corresponds to the general formula:
(Y₃Si-)ₙL'-P-L"(-SiY'₃)ₘ
wherein each Y and Y' is independently selected from alkoxy, aryloxy, acyloxy and halogens, n and m represent, independently from each other integers of 1, 2, 3, 4, 5, 6, 7, 8, 9 or 10 wherein the sum of n and m is at least 2, preferably 4 or at least 4, P represents the polysiloxane segments and L' and L" may be identical or different groups linking the silane residues -SiY₃ and SiY'₃ with the polysiloxane segment.

8. A composition containing dispersed in an organic solvent
(a) the condensation product of one or more hydrolysable silanes corresponding to the formula (Ia):
SiG₄ (Ia)
wherein G represents a hydrolysable group with the proviso that not all of the hydrolysable goups have been consumed;
(b) at least one polymer A comprising a polysiloxane segment and having a plurality of -SiY functional groups wherein Y represents a hydrolysable group and wherein the amount of hydrolyzable groups Y bonded to Si atoms is on average more than 6 per polymer; or a condensation product of a hydrolysation reaction thereof with the proviso that the reaction product is such that not all hydrolysable groups have been consumed,
(c) water,
(d) optionally, an inorganic or organic proton acid,
(e) optionally, at least one emulsifier,
and wherein the polymer A corresponds to the general formula:
(Y₃Si-)ₙL'-P-L"(-SiY'₃)ₘ
wherein each Y and Y' is independently selected from alkoxy, aryloxy, acyloxy and halogens, n and m represent, independently from each other integers of 1, 2, 3, 4, 5, 6, 7, 8, 9 or 10 wherein the sum of n and m is at least 2, preferably 4 or at least 4, P represents the polysiloxane segments and L' and L" may be identical or different groups linking the silane residues -SiY₃ and SiY'₃ with the polysiloxane segment.

## Patentansprüche

1. Verfahren zur Bereitstellung einer Schutzbeschichtung auf einer Oberfläche, umfassend
(i) Anwenden einer Zusammensetzung auf der Oberfläche, wobei die Zusammensetzung, in einem organischen Lösungsmittel dispergiert, Folgendes umfasst:
(a) wenigstens ein hydrolysierbares Silan, das der Formel (I) entspricht:
QₙSiG₄₋ₙ (I),
worin Q für eine Kohlenwasserstoffgruppe steht, die optional substituiert sein kann, G für eine hydrolysierbare Gruppe steht, und n 0, 1 oder 2 ist;
(b) wenigstens ein Polymer A, das ein Polysiloxansegment umfasst und mehrere funktionelle -SiY-Gruppen aufweist, wobei Y für eine hydrolysierbare Gruppe steht, und wobei die Menge an hydrolysierbaren Gruppen Y, die an Si-Atome gebunden sind, im Durchschnitt mehr als 6 pro Polymer ist;
oder ein Kondensationsprodukt einer Hydrolysierungsreaktion von (a) oder (b) oder (a) und (b) unter der Maßgabe, dass das Umsetzungsprodukt derart ist, dass nicht alle hydrolysierbaren Gruppen aufgebraucht wurden,
(ii) Wärmehärten der Zusammensetzung,
wobei die Oberfläche aus einem der Folgenden oder Kombinationen dieser ausgewählt ist:
Holzwerkstoffe, Stahl, Aluminium, keine Aluminiumradfelgen, Glas, Keramik, Polymermaterial, umfassend wenigstens ein Polycarbonat, Polyacrylat, Polymethacrylat, Polyester, Polyamid, Copolymere davon oder Kombinationen davon, und wobei das Polymer A der allgemeinen Formel entspricht:
(Y₃Si-)ₙL'-P-L"(-SiY'₃)ₘ
worin jedes Y und Y' unabhängig ausgewählt ist aus Alkoxy, Aryloxy, Acyloxy und Halogenen, n und m unabhängig voneinander ganze Zahlen von 1, 2, 3, 4, 5, 6, 7, 8, 9 oder 10 darstellen, wobei die Summe von n und m wenigstens 2, bevorzugt 4 oder wenigstens 4 ist, P die Polysiloxansegmente darstellt, und L' und L" gleiche oder unterschiedliche Gruppen sein können, die die Silanreste -SiY₃ und SiY'₃ mit dem Polysiloxansegment verbinden.

2. Verfahren nach einem der vorstehenden Ansprüche, wobei die hydrolysierbaren Gruppen G unabhängig aus Alkoxy, Aryloxy, Acyloxy und Halogenen ausgewählt sind.

3. Verfahren nach einem der vorstehenden Ansprüche, wobei das Polymer A wenigstens ein Polysiloxansegment umfasst, das eine durchschnittliche Anzahl an SiO-Einheiten von 5 bis 200 aufweist.

4. Verfahren nach einem der vorstehenden Ansprüche, wobei L' und/oder L" Urethan, Harnstoffeinheiten und Kombinationen davon enthalten.

5. Verwendung einer Zusammensetzung, die in einem organischen Lösungsmittel dispergiert Folgendes umfasst:
(a) wenigstens ein hydrolysierbares Silan, das der Formel (I) entspricht:
QnSiG4-n (I),
worin Q für eine Kohlenwasserstoffgruppe steht, die optional substituiert sein kann, G für eine hydrolysierbare Gruppe steht, und n 0, 1 oder 2 ist;
(b) wenigstens ein Polymer A, das ein Polysiloxansegment umfasst und mehrere funktionelle -SiY-Gruppen aufweist, wobei Y für eine hydrolysierbare Gruppe steht, und wobei die Menge an hydrolysierbaren Gruppen Y, die an Si-Atome gebunden sind, im Durchschnitt mehr als 6 pro Polymer ist;
oder ein Kondensationsprodukt einer Hydrolysierungsreaktion davon, unter der Maßgabe, dass das Umsetzungsprodukt derart ist, dass nicht alle hydrolysierbaren Gruppen aufgebraucht wurden,
als ein Anti-Graffitimittel, wobei das Polymer A der Folgenden allgemeinen Formel entspricht:
(Y₃Si-)ₙL'-P-L"(-SiY'₃)ₘ,
worin jedes Y und Y' unabhängig ausgewählt ist aus Alkoxy, Aryloxy, Acyloxy und Halogenen, n und m unabhängig voneinander ganze Zahlen von 1, 2, 3, 4, 5, 6, 7, 8, 9 oder 10 darstellen, wobei die Summe von n und m wenigstens 2 ist, bevorzugt 4 oder wenigstens 4, P die Polysiloxansegmente darstellt, und L' und L" identische oder unterschiedliche Gruppen sein können, die die Silanreste -SiY₃ und SiY'₃ mit dem Polysiloxansegment verbinden.

6. Verwendung einer Zusammensetzung, die in einem organischen Lösungsmittel dispergiert Folgendes umfasst:
(a) wenigstens ein hydrolysierbares Silan, das der Formel (I) entspricht:
QₙSiG₄₋ₙ (I),
worin Q für eine Kohlenwasserstoffgruppe steht, die optional substituiert sein kann, G für eine hydrolysierbare Gruppe steht, und n 0, 1 oder 2 ist;
(b) wenigstens ein Polymer A ein Polysiloxansegment umfasst und mehrere funktionelle -SiY-Gruppen aufweist, wobei Y für eine hydrolysierbare Gruppe steht, und wobei die Menge an hydrolysierbaren Gruppen Y, die an Si-Atome gebunden sind, im Durchschnitt mehr als 6 pro Polymer ist; oder ein Kondensationsprodukt einer Hydrolysierungsreaktion davon, unter der Maßgabe, dass das Umsetzungsprodukt derart ist, dass nicht alle hydrolysierbaren Gruppen aufgebraucht wurden,
als Fleckentfernungsmittel, wobei das Polymer A der folgenden allgemeinen Formel entspricht:
(Y₃Si-)ₙL'-P-L"(-SiY'₃)ₘ
worin jedes Y und Y' unabhängig ausgewählt ist aus Alkoxy, Aryloxy, Acyloxy und Halogenen, n und m unabhängig voneinander ganze Zahlen von 1, 2, 3, 4, 5, 6, 7, 8, 9 oder 10 darstellen, wobei die Summe von n und m wenigstens 2 ist, bevorzugt 4 oder wenigstens 4, P die Polysiloxansegmente darstellt, und L' und L" identische oder unterschiedliche Gruppen sein können, die die Silanreste -SiY₃ und SiY'₃ mit dem Polysiloxansegment verbinden.

7. Substrat mit einer Oberfläche, die das Umsetzungsprodukt einer Kondensationsreaktion einer Zusammensetzung enthält, die in einem organischen Lösungsmittel dispergiert Folgendes umfasst:
(a) wenigstens ein hydrolysierbares Silan, das der Formel (I) entspricht:
QₙSiG₄₋ₙ (I),
worin Q für eine Kohlenwasserstoffgruppe steht, die optional substituiert sein kann, G für eine hydrolysierbare Gruppe steht, und n 0, 1 oder 2 ist;
(b) wenigstens ein Polymer A, das ein Polysiloxansegment umfasst und mehrere funktionelle -SiY-Gruppen aufweist, wobei Y für eine hydrolysierbare Gruppe steht, und wobei die Menge an hydrolysierbaren Gruppen Y, die an Si-Atome gebunden sind, im Durchschnitt mehr als 6 pro Polymer ist;
oder ein Kondensationsprodukt einer Hydrolysierungsreaktion davon, unter der Maßgabe, dass das Umsetzungsprodukt derart ist, dass nicht alle hydrolysierbaren Gruppen aufgebraucht wurden,
und wobei die Oberfläche aus einem der Folgenden oder Kombinationen davon ausgewählt ist:
Holzwerkstoffe, Stahl, Aluminium, keine Aluminiumradfelgen, Glas, Keramik, Polymermaterial, umfassend wenigstens ein Polycarbonat, Polyacrylat, Polymethacrylat, Polyester, Polyamid, Copolymere davon oder Kombinationen davon, und wobei das Polymer A der allgemeinen Formel entspricht:
(Y₃Si-)nL'-P-L"(-SiY'₃)ₘ
worin jedes Y und Y' unabhängig ausgewählt ist aus Alkoxy, Aryloxy, Acyloxy und Halogenen, n und m unabhängig voneinander die ganzen Zahlen 1, 2, 3, 4, 5, 6, 7, 8, 9 oder 10 darstellen, wobei die Summe von n und m wenigstens 2 ist, bevorzugt 4 oder wenigstens 4, P die Polysiloxansegmente darstellt und L' und L" identische oder unterschiedliche Gruppen sein können, die die Silanreste -SiY₃ und SiY'₃ mit dem Polysiloxansegment verbinden.

8. Zusammensetzung, die in einem organischen Lösungsmittel dispergiert Folgendes enthält:
(a) das Kondensationsprodukt von einem oder mehreren hydrolysierbaren Silanen, entsprechend der Formel (la):
SiG₄ (Ia),
worin G eine hydrolysierbare Gruppe darstellt, unter der Maßgabe, dass nicht alle der hydrolysierbaren Gruppen verbraucht wurden;
(b) wenigstens ein Polymer A ein Polysiloxansegment umfasst und mehrere funktionelle -SiY-Gruppen aufweist, worin Y für eine hydrolysierbare Gruppe steht, und wobei die Menge an hydrolysierbaren Gruppen Y, die an Si-Atome gebunden sind, im Durchschnitt mehr als 6 pro Polymer beträgt; oder ein Kondensationsprodukt einer Hydrolysierungsreaktion davon unter der Maßgabe, dass das Reaktionsprodukt derart ist, dass nicht alle hydrolysierbaren Gruppen aufgebraucht wurden,
(c) Wasser,
(d) optional eine anorganische oder organische Protonsäure,
(e) optional wenigstens einen Emulgator,
und wobei das Polymer A der allgemeinen Formel entspricht:
(Y₃Si-)ₙL'-P-L"(-SiY'₃)ₘ
worin jedes Y und Y' unabhängig ausgewählt ist aus Alkoxy, Aryloxy, Acyloxy und Halogenen, n und m unabhängig voneinander ganze Zahlen von 1, 2, 3, 4, 5, 6, 7, 8, 9 oder 10 darstellen, wobei die Summe von n und m wenigstens 2 ist, bevorzugt 4 oder wenigstens 4, P die Polysiloxansegmente darstellt und L' und L" identische oder unterschiedliche Gruppen sein können, die die Silanreste -SiY₃ und SiY'₃ mit dem Polysiloxansegment verbinden.

## Revendications

1. Procédé pour conférer un revêtement de protection à une surface, comprenant
(i) l'application, sur une surface, d'une composition comprenant, dispersés dans un solvant organique
(a) au moins un silane hydrolysable correspondant à la formule (I)
QₙSiG₄₋ₙ (I)
dans laquelle Q représente un groupe hydrocarbure qui peut éventuellement être substitué, G représente un groupe hydrolysable et n vaut 0, 1 ou 2 ;
(b) au moins un polymère A comprenant un segment polysiloxane et ayant une pluralité de groupes fonctionnels -SiY dans lesquels Y représente un groupe hydrolysable et où la quantité de groupes hydrolysables Y liés à des atomes de Si est en moyenne supérieure à 6 par polymère ;
ou un produit de condensation d'une réaction d'hydrosilylation de (a) ou (b) ou de (a) et (b) à condition que le produit de réaction soit tel que les groupes hydrolysables n'aient pas tous été consommés,
(ii) le durcissement à la chaleur de la composition,
la surface étant choisie parmi l'une des suivantes ou leurs combinaisons :
bois d'ingénierie, acier, aluminium autre que jantes en aluminium, verre, céramique, matériau polymère comprenant au moins un polycarbonate, polyacrylate, polyméthacrylate, polyester, polyamide, des copolymères de ceux-ci ou des combinaisons de ceux-ci, et le polymère A correspondant à la formule générale :
(Y₃Si-)ₙL'-P-L"(-SiY'₃)ₘ
dans laquelle chaque Y et Y' est choisi indépendamment parmi des alcoxy, aryloxy, acyloxy et halogènes, n et m représentent, indépendamment l'un de l'autre, des entiers valant 1, 2, 3, 4, 5, 6, 7, 8, 9 ou 10, la somme de n et m étant au moins égale à 2, préférablement à 4 ou au moins à 4, P représentant les segments polysiloxane et L' et L" pouvant être des groupes identiques ou différents reliant les résidus silane -SiY₃ et SiY'₃ au segment polysiloxane.

2. Procédé selon l'une quelconque des revendications précédentes, dans lequel les groupes hydrolysables G sont choisis indépendamment parmi des alcoxy, aryloxy, acyloxy et halogènes.

3. Procédé selon l'une quelconque des revendications précédentes, dans lequel ledit polymère A comprend au moins un segment polysiloxane ayant un nombre moyen de motifs SiO allant de 5 à 200.

4. Procédé selon l'une quelconque des revendications précédentes, dans lequel L' et/ou L" contiennent de l'uréthane, des fragments urée et des combinaisons de ceux-ci.

5. Utilisation d'une composition comprenant, dispersés dans un solvant organique
(a) au moins un silane hydrolysable correspondant à la formule (I)
QₙSiG₄₋ₙ (I)
dans laquelle Q représente un groupe hydrocarbure qui peut éventuellement être substitué, G représente un groupe hydrolysable et n vaut 0, 1 ou 2 ;
(b) au moins un polymère A comprenant un segment polysiloxane et ayant une pluralité de groupes fonctionnels -SiY dans lesquels Y représente un groupe hydrolysable et où la quantité de groupes hydrolysables Y liés à des atomes de Si est en moyenne supérieure à 6 par polymère ;
ou un produit de condensation d'une réaction d'hydrosilylation de ceux-ci à condition que le produit de réaction soit tel que les groupes hydrolysables n'aient pas tous été consommés,
en tant qu'agent anti-graffiti, le polymère A correspondant à la formule générale :
(Y₃Si-)ₙL'-P-L"(-SiY'₃)ₘ
dans laquelle chaque Y et Y' est choisi indépendamment parmi des alcoxy, aryloxy, acyloxy et halogènes, n et m représentent, indépendamment l'un de l'autre, des entiers valant 1, 2, 3, 4, 5, 6, 7, 8, 9 ou 10, la somme de n et m étant au moins égale à 2, préférablement à 4 ou au moins à 4, P représentant les segments polysiloxane et L' et L" pouvant être des groupes identiques ou différents reliant les résidus silane -SiY₃ et SiY'₃ au segment polysiloxane.

6. Utilisation d'une composition comprenant, dispersés dans un solvant organique
(a) au moins un silane hydrolysable correspondant à la formule (I)
QnSiG4-n (I)
dans laquelle Q représente un groupe hydrocarbure qui peut éventuellement être substitué, G représente un groupe hydrolysable et n vaut 0, 1 ou 2 ;
(b) au moins un polymère A comprenant un segment polysiloxane et ayant une pluralité de groupes fonctionnels -SiY dans lesquels Y représente un groupe hydrolysable et où la quantité de groupes hydrolysables Y liés à des atomes de Si est en moyenne supérieure à 6 par polymère ; ou un produit de condensation d'une réaction d'hydrosilylation de ceux-ci à condition que le produit de réaction soit tel que les groupes hydrolysables n'aient pas tous été consommés,
en tant qu'agent d'élimination de taches, le polymère A correspondant à la formule générale :
(Y₃Si-)ₙL'-P-L"(-SiY'₃)ₘ
dans laquelle chaque Y et Y' est choisi indépendamment parmi des alcoxy, aryloxy, acyloxy et halogènes, n et m représentent, indépendamment l'un de l'autre, des entiers valant 1, 2, 3, 4, 5, 6, 7, 8, 9 ou 10, la somme de n et m étant au moins égale à 2, préférablement à 4 ou au moins à 4, P représentant les segments polysiloxane et L' et L" pouvant être des groupes identiques ou différents reliant les résidus silane -SiY₃ et SiY'₃ au segment polysiloxane.

7. Substrat ayant une surface contenant le produit de réaction d'une réaction de condensation d'une composition comprenant, dispersés dans un solvant organique
(a) au moins un silane hydrolysable correspondant à la formule (I)
QₙSiG₄₋ₙ (I)
dans laquelle Q représente un groupe hydrocarbure qui peut éventuellement être substitué, G représente un groupe hydrolysable et n vaut 0, 1 ou 2 ;
(b) au moins un polymère A comprenant un segment polysiloxane et ayant une pluralité de groupes fonctionnels -SiY dans lesquels Y représente un groupe hydrolysable et où la quantité de groupes hydrolysables Y liés à des atomes de Si est en moyenne supérieure à 6 par polymère ;
ou un produit de condensation d'une réaction d'hydrosilylation de ceux-ci à condition que le produit de réaction soit tel que les groupes hydrolysables n'aient pas tous été consommés,
et la surface étant choisie parmi l'une des suivantes ou leurs combinaisons :
bois d'ingénierie, acier, aluminium autre jantes en aluminium, verre, céramique, matériau polymère comprenant au moins un polycarbonate, polyacrylate, polyméthacrylate, polyester, polyamide, des copolymères de ceux-ci ou des combinaisons de ceux-ci, et le polymère A correspondant à la formule générale :
(Y₃Si-)ₙL'-P-L"(-SiY'₃)ₘ
dans laquelle chaque Y et Y' est choisi indépendamment parmi des alcoxy, aryloxy, acyloxy et halogènes, n et m représentent, indépendamment l'un de l'autre, des entiers valant 1, 2, 3, 4, 5, 6, 7, 8, 9 ou 10, la somme de n et m étant au moins égale à 2, préférablement à 4 ou au moins à 4, P représentant les segments polysiloxane et L' et L" pouvant être des groupes identiques ou différents reliant les résidus silane -SiY₃ et SiY'₃ au segment polysiloxane.

8. Composition contenant, dispersés dans un solvant organique
(a) le produit de condensation d'un ou plusieurs silanes hydrolysables correspondant à la formule (la) :
SiG₄ (la)
dans laquelle G représente un groupe hydrolysable à condition que tous les groupes hydrolysables n'aient pas été consommés ;
(b) au moins un polymère A comprenant un segment polysiloxane et ayant une pluralité de groupes fonctionnels -SiY dans lesquels Y représente un groupe hydrolysable et où la quantité de groupes hydrolysables Y liés à des atomes de Si est en moyenne supérieure à 6 par polymère ; ou un produit de condensation d'une réaction d'hydrosilylation de ceux-ci à condition que le produit de réaction soit tel que les groupes hydrolysables n'aient pas tous été consommés,
(c) de l'eau,
(d) éventuellement, un acide protonique inorganique ou organique,
(e) éventuellement, au moins un émulsifiant,
et le polymère A correspondant à la formule générale :
(Y₃Si-)ₙL'-P-L"(-SiY'₃)ₘ
dans laquelle chaque Y et Y' est choisi indépendamment parmi des alcoxy, aryloxy, acyloxy et halogènes, n et m représentent, indépendamment l'un de l'autre, des entiers valant 1, 2, 3, 4, 5, 6, 7, 8, 9 ou 10, la somme de n et m étant au moins égale à 2, préférablement à 4 ou au moins à 4, P représentant les segments polysiloxane et L' et L" pouvant être des groupes identiques ou différents reliant les résidus silane -SiY₃ et SiY'₃ au segment polysiloxane.
